# EUROPÄISCHE PATENTSCHRIFT

(11) **EP 2 917 690 B1**
(45) Veröffentlichungstag und Bekanntmachung des Hinweises auf die Patenterteilung: **12.07.2017**
(21) Anmeldenummer: 13795186.9
(22) Anmeldetag: 29.10.2013
(51) Int. Cl.: G01C 9/24

(54) **OPTOELEKTRONISCHER NEIGUNGSSENSOR**
OPTOELECTRONIC INCLINATION SENSOR
CAPTEUR D'INCLINAISON OPTOÉLÉCTRONIQUE

(30) Priorität: 08.11.2012 DE 102012110693
(43) Veröffentlichungstag der Anmeldung: 16.09.2015
(73) Patentinhaber: Sartorius Lab Instruments GmbH & Co. KG, 37079 Göttingen (DE)
(72) Erfinder: MÜLLER, Ralf, 09648 Mittweida (DE); BRODERSEN, Olaf, 99094 Erfurt (DE); MITRENGA, Dennis, 99085 Erfurt (DE); ORTLEPP, Hans-Georg, 99192 Apfelstädt (DE)
(74) Vertreter: Engel, Christoph Klaus
(86) Internationale Anmeldenummer: PCT/EP2013/072576
(87) Internationale Veröffentlichungsnummer: WO 2014/072205

(56) Entgegenhaltungen:
- WO-A1-2008/064731
- DE-A1- 19 604 255
- DE-A1- 19 854 812
- GB-A- 2 238 382
- US-A1- 2007 169 362

## Beschreibung

Die Erfindung betrifft einen Neigungssensor gemäß dem Oberbegriff des Anspruchs 1.

Gattungsgemäße Neigungssensoren umfassen ein Gehäuse, das mit einer Flüssigkeit und einer Gasblase gefüllt ist, wobei die Flüssigkeit die Gasblase umschließt. Das Gehäuse ist in der Art einer Libelle durch eine konvex gewölbte Deckschicht abgeschlossen, an der sich die Gasblase entlang bewegt, wenn der Neigungssensor gegenüber einer horizontalen Bezugsebene gekippt wird. Gattungsgemäße Neigungssensoren umfassen weiterhin eine Lichtquelle und mindestens einen Fotodetektor, wobei die Lichtquelle entweder die Gasblase durchleuchtet oder das Licht an der Deckschicht reflektiert wird.

Aus dem Stand der Technik sind zahlreiche solcher Neigungssensoren bekannt. Diese werden üblicherweise zum horizontalen oder vertikalen Ausrichten von Apparaturen wie beispielsweise Messinstrumenten verwendet. Die Gasblase in der abgeschlossenen Flüssigkeit zeigt dabei die Ausrichtung der Libelle an. Sie befindet sich durch den Auftrieb stets an der Oberfläche der Flüssigkeit und bei entsprechender Dimensionierung am höchsten Punkt des den Flüssigkeitsraum abschließenden gewölbten Gehäusedeckels. Zum Zwecke einer verbesserten Empfindlichkeit ist die Libelle an ihrer Oberseite zumeist mit einem innen konkaven Deckglas versehen. Die Empfindlichkeit des Sensors hängt dann unter anderem vom Krümmungsradius des Deckglases ab.

Die DE 10 2005 056 736 A1 beschreibt einen Neigungssensor mit einer Libelle, bei der oberhalb des Deckglases eine Lichtquelle und mindestens zwei Lichtempfänger angeordnet sind. Das Licht wird bei zentrierter Gasblase an der Grenzfläche zwischen Gasblase und Deckglas total reflektiert und mittels zweier Lichtempfänger detektiert.

Die DE 39 38 848 A1 beschreibt einen Neigungssensor, der eine herkömmliche Röhrenlibelle enthält. Über der Röhrenlibelle ist eine Lichtquelle angeordnet, die die gesamte Länge der Röhrenlibelle ausleuchtet. Das von der Lichtquelle ausgehende Licht tritt durch das transparente Gehäuse und die ebenfalls lichtdurchlässige Flüssigkeit wie auch durch die Gasblase. Auf der der Lichtquelle gegenüberliegenden Seite der Libelle entsteht eine ungleichförmige Lichtverteilung, die auf einem darunter angeordneten Fotodetektor ausgewertet wird.

Die DE 198 54 812 A1 beschreibt eine Winkelmessvorrichtung zum Erfassen von Winkelabweichungen gegenüber einer Bezugslage. Die Vorrichtung umfasst eine in der Bezugslage horizontal ausgerichtete Libelle, die mit einer optisch transparenten Flüssigkeit gefüllt ist und in die eine Gasblase eingebracht ist. Eine Beleuchtungseinheit beleuchtet die gesamte Libelle, eine Empfangseinheit erfasst das von der Gasblase beeinflusste Licht. Dabei kann sowohl ein Durchlichtverfahren als auch eine Variante, bei der das von der Blase reflektierte Licht detektiert wird, zum Einsatz kommen. Bei dieser Variante ist eine diffus emittierende LED unmittelbar unter der Gasblase der Libelle angeordnet. Die Fotodioden befinden sich symmetrisch zur LED ebenfalls unter der Blase und detektieren das an der Blase reflektierte Licht.

Aus der WO 2008/064731 A1 ist ein Neigungssensor mit einer optoelektronischen Libelle bekannt, bei welcher das Deckglas mit einer Mikrorauigkeit versehen ist, wodurch eine Fresnel-Reflexion an der Grenzfläche zwischen dem Deckglas und der Gasblase oder eine Streulichtgeneration erfolgt. Als wirksame Grenzfläche in dieser Anordnung dient die Unterseite des Deckglases in dem Bereich, in dem die Gasblase die Unterseite des Deckglases berührt.

Aus der US 5,794,355 A ist ein Positionssensor bekannt, bei welchem zwei gewölbte Oberflächen konzentrisch angeordnet sind, welche in der Art einer Libelle mit einer viskosen Flüssigkeit und einer Blase gefüllt ist. Die Libelle ist zwischen einer Strahlungsquelle und einem Detektor angeordnet. Die Flüssigkeit in der Libelle ist eine strahlungsabsorbierende Flüssigkeit, während die Blase die Lichtstrahlung hindurch lässt. In einer Ausführungsform ist die Flüssigkeit ein Leichtöl und das Gas Stickstoff. Die Dichte des Öls muss abgestimmt werden auf die Größe der Libelle und die geforderte Geschwindigkeit der Blase. Das Leichtöl kann mit einer Substanz wie beispielsweise Graphit versetzt sein, um die Absorptionsfähigkeit zu erhöhen. Die gewölbten Oberflächen sind transparent für das ausgesendete Licht, beispielsweise wird ein Acrylglas heiß gepresst auf eine geforderte Krümmung oder ein flüssiges Urethanplastik in eine mit der geforderten Krümmung gestaltete Form gegossen.

Die JP H10-227635 A beschreibt einen Neigungssensor umfassend ein Gehäuse mit einer gewölbten Deckschicht, welches mit einer Flüssigkeit und einer Gasblase gefüllt ist. Eine LED bestrahlt das Gehäuse mit infrarotem Licht. Das an der Grenzfläche zwischen Gasblase und Deckschicht reflektierte Licht wird von einem Fototransistor empfangen. LED und Fototransistor sind oberhalb der Gasblase und außerhalb des mit Flüssigkeit gefüllten Gehäuses angeordnet.

Die GB 2 238 382 A befasst sich mit einem Neigungssensor, bei dem Licht von einer Lichtquelle zu einem Flüssigkeitsreservoir abgestrahlt wird. Das meiste Licht erreicht das Flüssigkeitsreservoir, wird teilweise von einer reflektierenden Oberfläche zurück reflektiert und erreicht Sensoren, welche im gleichen Abstand zur Lichtquelle rechts und links der Lichtquelle angeordnet sind. Zusätzlich wird von einer Blase Licht reflektiert.

Die US 2007/169362 A1 beschreibt einen mehrachsigen Blasen-Hohlkörper mit einem Hohlkörperelement, das eine Fluidkammer mit einer gewölbten oberen Fläche aufweist. Eine Blase kann abhängig von der Ausrichtung des Hohlkörpers entlang der oberen Fläche bewegt werden. Über dem Hohlkörper befindet sich mittig eine Lichtquelle zum Aussenden von Licht in die Fluidkammer. Um die Lichtquelle herum sind vier Sensoren positioniert. Unterhalb der Fluidkammer ist ein Reflektor angeordnet.

Bei den Neigungssensoren wird die Leistungsfähigkeit durch die Kennlinie dargestellt, die den Zusammenhang zwischen der tatsächlichen Neigungsänderung und der Neigungsanzeige meist als Spannungswert beschreibt. Je steiler diese Kennlinie ist, desto empfindlicher ist das System. Kennlinien von elektronischen Neigungsmessern sind fast immer S-förmig, so dass nur der lineare Teil verwendbar ist.

Der Erfindung liegt die Aufgabe zu Grunde, einen Neigungssensor zu schaffen, der nach der Art einer Libelle arbeitet, der sehr kompakt und preiswert herstellbar ist und der eine einfach auswertbare Kennlinie besitzt. Die Auswertung der Kennlinie ist unproblematisch, wenn sie für einen Blasenlauf in minus-y-Richtung negative Werte und für einen Blasenlauf in plus-y-Richtung positive Werte annimmt (oder umgekehrt). Weitere Nulldurchgänge der Kennlinie außerhalb der Mittenstellung der Blase sind unerwünscht.

Die Aufgabe wird durch einen Neigungssensor mit den Merkmalen des Anspruchs 1 gelöst.

Bevorzugte Ausführungsformen sind in den Unteransprüchen angegeben.

Ein erfindungsgemäßer Neigungssensor umfasst ein Gehäuse, das mit einer Flüssigkeit und einer Gasblase gefüllt ist und durch eine konvex gewölbte Deckschicht abgeschlossen ist. An der Deckschicht bewegt sich die Gasblase entlang, wenn der Neigungssensor gegenüber einer horizontalen oder vertikalen Bezugsebene gekippt wird. Der Neigungssensor umfasst eine Lichtquelle und einen Fotodetektor, die in einer Ebene der Deckschicht gegenüberliegend angeordnet sind. Dabei befindet sich die Gasblase also zwischen der Deckschicht und dem Fotodetektor. Erfindungsgemäß ist die Lichtabsorption der Flüssigkeit ganz spezifisch eingestellt und auf die Reflektivität des Gehäuses und der Deckschicht abgestimmt.

Der Absorptionsfaktor der Flüssigkeit ist dabei so einzustellen, dass nach einer einzigen Reflexion an der Gasblase diese reflektierten Strahlen, die ohne weitere Reflexionen am Fotodetektor auftreffen, von diesem noch sicher erfassbar sind. D.h. die Strahlungsintensität muss trotz der teilweisen Absorption in der Flüssigkeit im Messbereich des Fotodetektors liegen. Hingegen soll die Strahlung, die nicht an der Gasblase reflektiert wird, in der Flüssigkeit möglichst stark gedämpft werden, um das Signal-Rausch-Verhältnis des Sensors zu verbessern. Strahlen, die mehrfach reflektiert werden oder nur an der Wandung des Flüssigkeitsbehälters an einer Grenzfläche Flüssigkeit-Gehäuse oder Flüssigkeit-Deckschicht reflektiert werden, laufen über einen längeren Weg durch die absorbierende Flüssigkeit, sodass die resultierende Gesamtabsorption entsprechend höher als bei einem kurzen Strahlengang ist. Hingegen sollen Strahlen, die an der Grenzfläche Gasblase-Deckschicht reflektiert werden, nicht zu stark absorbiert werden. Die dort reflektierten Strahlen laufen dann ohne Absorption erneut durch die Gasblase und nach Austritt aus der Gasblase über eine kurze Flüssigkeitsstrecke zum Detektor.

Vorzugsweise sind die Materialien des Gehäuses und der Deckschicht so gewählt, dass sie die Streustrahlung im Inneren des Gehäuses weitgehend absorbieren. Die Summe der Reflexionen aus Spekular- und Streuanteil an der Deckschicht soll vorzugsweise kleiner 30% sein. Allein durch Realisieren dieser Bedingung kann die Erfindung umgesetzt werden, wobei vorzugsweise wiederum eine Flüssigkeit verwendet wird, die für die Wellenlänge der Lichtquelle einen Absorptions-Koeffizienten größer 0,05 mm⁻¹ aufweist. Der gewünschte Reflexionswert kann auch dadurch erreicht werden, dass für die Grenzflächen zwischen der Flüssigkeit und dem Gehäuse eine Lichtstreuung mit Lambert-Charakteristik implementiert wird. Dabei müssen Gehäuse und Deckschicht nicht zwingend aus dem gleichen Material bestehen.

Die Vorteile der Erfindung sind insbesondere darin zu sehen, dass durch die Anordnung der Lichtquelle und der Fotodetektoren unterhalb der Gasblase die Deckschicht mit der Wölbung nicht mehr aufwendig aus Glas hergestellt werden muss, sondern sich hier auch völlig neue Perspektiven für die Materialwahl der Deckschicht ergeben, so dass der Neigungssensor besonders preisgünstig herstellbar ist.

Wird beispielsweise dunkel eloxiertes Aluminium für Gehäuse und Deckschicht gewählt, beträgt der TIS-Wert (Total Integrated Scatter) für die Grenzfläche zwischen Gehäuse und Flüssigkeit etwa 0,15 und für die Grenzfläche zwischen Gehäuse und Gasblase etwa 0,2.

Weiterhin kann vorteilhafterweise der Sensor sehr klein gestaltet werden, was gleichzeitig für eine monotone Kennlinie sorgt, weil der Bewegungsbereich des Gasblase gegenüber herkömmlichen Libellen eingeschränkt ist. Dabei ist es besonders bevorzugt, wenn der Sensor maximal den dreifachen Durchmesser der Gasblase hat, das heißt die Gasblase sich nach jeder Seite ausgehend von Zentrum um nicht mehr als ihren eigenen Durchmesser bewegen kann.

In einer bevorzugten Ausführungsform kann aufgrund der Materialwahl für das Gehäuse und die Deckschicht die Grenzflächenspannung zwischen der Deckschicht und der Flüssigkeit sowie die Oberflächenspannung zwischen Flüssigkeit und Gasblase dahingehend optimiert werden, dass selbst bei kleinsten Lageabweichungen ein "Ruckeln" der Gasblase an der Deckschicht vermieden werden kann.

Vorteilhafterweise sind Deckschichten aus Metallen, Halbmetallen oder Kunststoffen wesentlich leichter und preisgünstiger herzustellen und zu bearbeiten, als die bisher verwendeten Deckgläser der Libellen.

Metalle, Halbmetalle oder Kunststoffe können insbesondere durch Polieren, Schleifen, Sandstrahlen, Ätzen, Bedampfen oder durch Korrosion mit einer bestimmten definierten Rauheit versehen werden. Besonders bevorzugt ist es natürlich, wenn die Deckschicht einen guten Kompromiss zwischen Glattheit und optimal eingestellter Reflektivität aufweist, d.h. einerseits ein "Ruckeln" der Gasblase vermieden wird und andererseits ein ausreichend hoher Reflexionsgrad erreicht ist, der die sichere Auswertung der an der Grenzschicht zwischen Gasblase und Decksicht reflektierten Strahlen durch den Fotodetektor gestattet.

Weiterhin vorteilhaft ist, dass sich die für die Deckschicht und das Gehäuse vorgeschlagenen Materialien gut bearbeiten lassen, um einen möglichst großen Radius der Wölbung herzustellen. Das Problem des "Ruckelns" der Gasblase verstärkt sich normalerweise mit größer werdendem Radius der Wölbung.

Die in dem Neigungssensor verwendete Flüssigkeit ist hinsichtlich ihres Absorptionsverhaltens auf das Absorptionsverhalten des Gehäuses und der Deckschicht abzustimmen. Die Flüssigkeit besitzt für die Wellenlänge der verwendeten Lichtquelle vorzugsweise einen Absorptions-Koeffizienten größer 0,05 mm⁻¹. In einer bevorzugten Ausführungsform wird die Flüssigkeit aus der Gruppe der Alkane gewählt. In einer besonders bevorzugten Ausführungsform ist die Flüssigkeit eingefärbtes Heptan. Die Flüssigkeit kann z.B. mit einem blauen Farbstoff eingefärbt werden, wenn die Lichtquelle rotes Licht emittiert.

Vorzugsweise sind sowohl die Deckschicht als auch eine Mantelfläche des Gehäuses lichtundurchlässig und an ihrer Innenseite mäßig lichtabsorbierend, wobei die Deckschicht gleichzeitig möglichst glatt ausgebildet wird.

Lichtquelle und Fotodetektoren sind am Boden des Gehäuses vorgesehen, so dass die Gasblase von der Unterseite her beleuchtet wird und als wirksame, den Strahlengang beeinflussende Grenzfläche die Grenzfläche zwischen der Flüssigkeit und der Gasblase dient. An dieser Grenzfläche tritt die sogenannte Fresnel-Reflexion auf. Das von der Lichtquelle ausgesendete Licht wird an der Grenzfläche teilweise reflektiert und zu den ebenfalls im Boden angeordneten Sensoren (Fotodetektoren) reflektiert.

Die Sensoren sind vorzugsweise so angeordnet, dass die Bestrahlungsstärke auf der Seite (bezogen auf eine Symmetrieachse der Libelle) zunimmt, auf der sich der größere Teil der Gasblase befindet, wenn die Libelle aus dem Lot gebracht ist. Mit der Anordnung der Sensoren und der Materialwahl für Flüssigkeit, Gehäuse und Deckschicht wird erreicht, dass das Sensorsignal um das Lot herum monoton steigend oder fallend ist und für alle Blasenpositionen einer Verschieberichtung nur positiv oder nur negativ ist, was für die Auswertung der Signale der Fotodioden besonders vorteilhaft ist.

In abgewandelten Ausführungsformen kann die Lichtquelle durch eine Blende oder andere optische Mittel ergänzt werden.

Die Lichtquelle emittiert vorzugsweise divergentes Licht (beispielsweise LED) und ist mit einer optischen Achse des Neigungssensors zentriert, welche gleichzeitig die Symmetrieachse der Libelle bildet. Die Lichtquelle ist vorzugsweise plan und besitzt eine Lambert-Charakteristik bzw. stellt einen Cosinusstrahler dar.

Eine besonders bevorzugte Ausführungsform der Erfindung wird nachfolgend anhand der Figuren erläutert. Es zeigen:
- Fig. 1:: einen erfindungsgemäßen Neigungssensor in einer Längsschnittdarstellung;
- Fig. 2:: einen Strahlengang in der in Fig. 1 gezeigten mittleren Schnittebene des Neigungssensors in einer ersten geneigten Lage;
- Fig. 3:: einen Strahlengang in der in Fig. 1 gezeigten mittleren Schnittebene des Neigungssensors in einer zweiten geneigten Lage;
- Fig. 4:: einen Strahlengang in der in Fig. 1 gezeigten mittleren Schnittebene des Neigungssensors in einer dritten geneigten Lage;
- Fig. 5:: eine Ansicht des Sensors gemäß Fig. 1 von oben ohne Deckplatte;
- Fig. 6:: Signalverlauf der Sensorsignale des in Fig. 1 gezeigten Neigungssensors bei Neigung in y-Richtung;
- Fig. 7:: ein Signaldiagramm für eine zweite bevorzugte Parameterkonstellation des Neigungssensors;
- Fig. 8:: ein Signaldiagramm für eine dritte bevorzugte Parameterkonstellation des Neigungssensors.

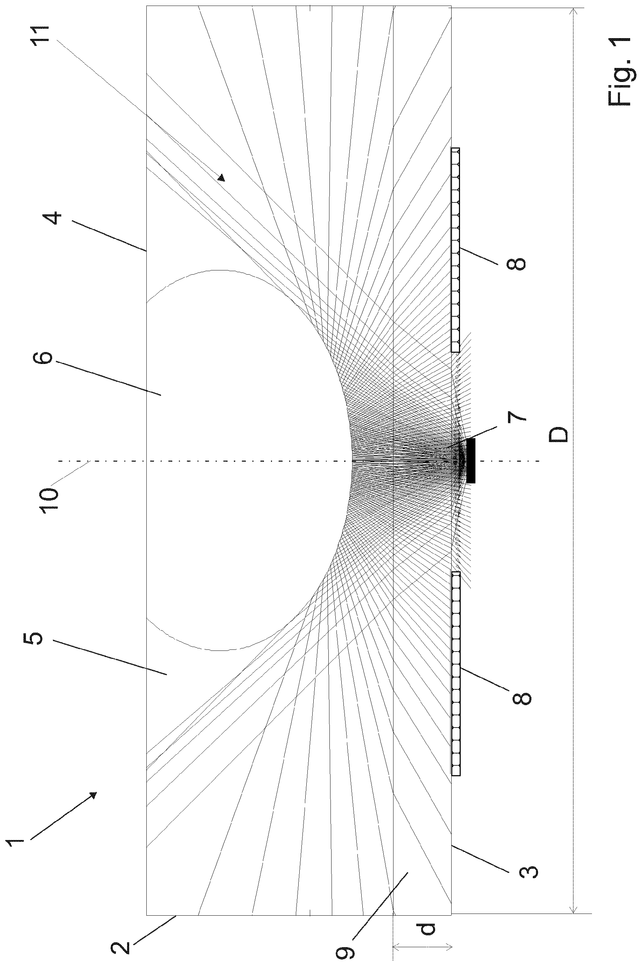

Fig. 1 zeigt eine Prinzipdarstellung eines erfindungsgemäßen Neigungssensors 1 in einem Längsschnitt. Der Neigungssensor 1 umfasst ein Gehäuse mit einer Mantelfläche 2, einem Boden 3 und einer Deckschicht 4.

Das Gehäuse ist mit einer Flüssigkeit 5 gefüllt, die eine Gasblase 6 umgibt. Die Gasblase 6 liegt an der Deckschicht 4 an und bewegt sich an dieser entlang, wenn der Neigungssensor 1 aus seiner dargestellten horizontalen Lage verkippt wird.

Die Deckschicht 4 ist in bekannter Weise konkav gewölbt, was aufgrund des großen Radius der Wölbung in den Figuren nicht dargestellt ist.

Am Boden 3 des Gehäuses sind eine Lichtquelle 7 und ein Fotodetektor 8 angeordnet. Der Fotodetektor 8 umfasst in der dargestellten Ausführungsform zwei ringsegmentförmige Fotodetektoren 8.1 und 8.2. Die Lichtquelle 7 ist eine divergent emittierende Lichtquelle 7 vorzugsweise mit einer winkelmäßigen Cosinusverteilung, beispielsweise eine LED.

Lichtquelle 7 und Fotodetektor 8 sind durch eine Glasplatte 9 abgedeckt oder in ein Glassubstrat eingebettet und somit vor der Flüssigkeit geschützt.

Lichtquelle 7, Fotodetektor 8 und vorzugsweise auch eine Auswerteschaltung zur Auswertung der Signale der Fotodetektoren sind vorteilhafterweise auf einem gemeinsamen Substrat angeordnet (nicht dargestellt). Unter der Glasplatte 9 oder zwischen zwei Glasplatten kann weiterhin eine Blendenoptik zur Formung des Lichtkegels vorgesehen sein. Die Anordnung und Auswahl der effektiven Größe und Form der Fotodetektoren kann durch den Fachmann erfolgen.

In der dargestellten Lage ist die Gasblase 6 an einer optischen Achse 10 zentriert. Die optische Achse 10 ist in der dargestellten Ausführungsform auch die Rotationsachse des Neigungssensors 1. Mit dem dargestellten Neigungssensor kann die Abweichung von der horizontalen Bezugsebene in zwei Dimensionen ermittelt werden, wie es mit einer Dosenlibelle der Fall ist. Selbstverständlich kann in abgewandelten Ausführungsformen der Neigungssensor auch in der Art einer Röhrenlibelle ausgeführt werden.

Exemplarisch sind mit 11 einige Strahlengänge angedeutet. Die Lichtquelle 7 sendet Strahlen mit einer winkelmäßigen Cosinusverteilung aus. Wegen der besseren Übersichtlichkeit sind hier nur die durch Fresnel-Reflexion an der Gasblase reflektierten Strahlen gezeigt. Strahlen, die die Deckschicht oder die Mantelfläche erreichen, enden in der Darstellung dort, um die Übersichtlichkeit zu erhalten (obwohl in der Praxis eine vollständige Absorption an der Deckschicht oder der Mantelfläche 2 nicht erreicht wird). Die an der Grenzschicht zur Gasblase reflektierten Strahlen treffen auf die Mantelfläche 2 und den Boden 3, wo sie im Bereich der Fotodetektoren empfangen und an den übrigen Flächen absorbiert werden.

In der dargestellten Ausführungsform beträgt der Durchmesser D des Gehäuses 11 mm, die Glasplatte 9 hat hier eine Dicke d von 0,7 mm. Die Mantelfläche 2 hat eine Höhe von 3 mm. Die Gasblase 6 hat einen Durchmesser von 4,6 mm und eine Höhe von 2,9 mm.

Als Flüssigkeit wird vorzugsweise eingefärbtes Heptan verwendet, dadurch wird die Temperaturabhängigkeit des Neigungssensors verbessert, weil die Gasblase sich bei Temperaturerhöhung weniger stark ausdehnt. Für diese Konfiguration hat sich ein Absorptionskoeffizient von 0,5 mm⁻¹ als besonders vorteilhaft herausgestellt.

Die grundsätzliche Dimensionierung von Libellen ist dem Fachmann bekannt, es gibt hierfür beispielsweise verschiedene DIN-Normen. Daher wird hier auf weitere Erläuterungen diesbezüglich verzichtet.

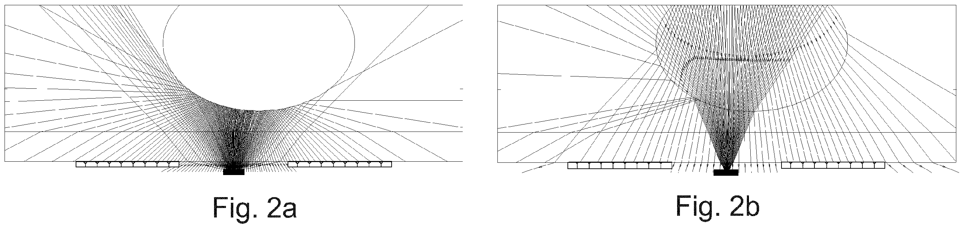

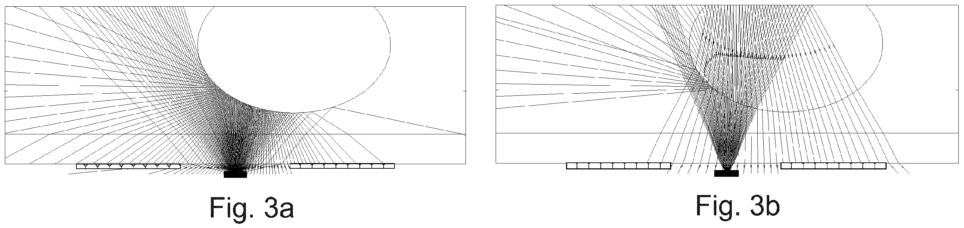

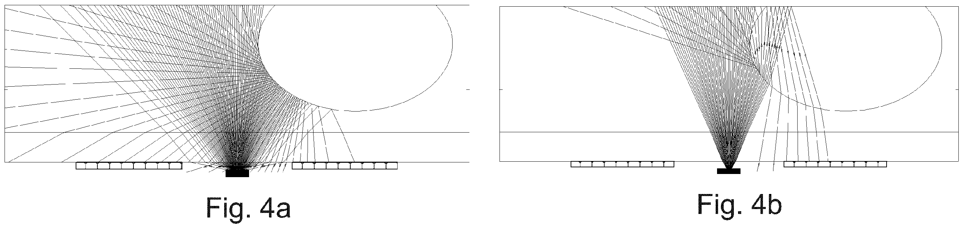

In den Fig. 2 bis 4 ist eine Neigung des Neigungssensors von der Bildebene aus gesehen nach links dargestellt. Die Gasblase wandert somit nach rechts. Dabei zeigen jeweils die Abbildungen a) die Fresnel-Reflexionen an der Gasblase, während jeweils in den Abbildungen b) die Strahlengänge der durch die Gasblase hindurchgehenden und an der Deckschicht reflektierten Strahlen dargestellt sind. Zusätzlich sind in den Abbildungen b), die an der Grenzfläche Flüssigkeit/Gasblase total reflektierten Strahlen mit dargestellt.

Es ist hier in den Abbildungen a) der Fig. 2 bis 4 zunächst zu erkennen, dass durch die Fresnel-Reflexionen auch bei veränderter Position der Gasblase kein wesentlicher Unterschied für die Anzahl der auf den beiden Detektoren auftreffenden Strahlen generiert wird. Strahlen werden an der Gasblase (Grenzfläche Flüssigkeit/Gas) reflektiert (Fresnel-Reflexion) und an der Deckschicht absorbiert.

Die an der Gasblase reflektierten Strahlen durchlaufen einen signifikant kürzeren Weg in der absorbierenden Flüssigkeit, als diejenigen Strahlen, die an der Gasblase vorbeilaufen, wodurch das Signal an dem Detektor, zu dem die Gasblase verschoben ist, zunimmt. Weiterhin sind die Deckschicht 4 und die Mantelfläche 2 nur mäßig absorbierend gestaltet, so dass auf der Seite, auf der sich die Gasblase befindet, durch Reflexionen an der Grenzfläche Gasblase-Deckschicht mehr Lichtenergie zum Fotodetektor auf der Blasenseite geführt wird. Auf der Seite, auf der sich die Gasblase nicht befindet, wird diese Lichtenergie größtenteils in der Flüssigkeit absorbiert.

In den Abbildungen b) der Fig. 2 bis 4 sind Transmissionen der Lichtstrahlen durch die Gasblase hindurch dargestellt. Strahlen, die an der Blase vorbei nur in der Flüssigkeit laufen und die Deckschicht erreichen bleiben an dieser "stehen". Damit soll verdeutlicht werden, dass diese Strahlen einen relativ langen Weg in der Flüssigkeit "laufen" und so in der Flüssigkeit absorbiert werden. Dies soll aber nicht bedeuten, dass es gar keine Reflexion an der Deckschicht gibt. Strahlen, die innerhalb der Gasblase die Deckschicht erreichen, werden an dieser reflektiert. Dies soll hier ein Mittel der Darstellung sein, um zu verdeutlichen, dass diese Strahlen auf Grund des relativ kurzen Weges in der Flüssigkeit nur wenig Absorption unterliegen. Die Intensität und Anzahl dieser reflektierten Lichtstrahlen ist auf der Seite größer, auf der sich die Gasblase befindet. Diese Strahlen durchlaufen die absorbierende Flüssigkeit ebenfalls auf einer deutlich kürzeren Strecke und sorgen für eine Verstärkung des Signals auf der Seite, auf der die Gasblase sich befindet.

Es werden außerdem bei der erfindungsgemäßen Anordnung im Vergleich zum Stand der Technik flächenmäßig kleinere Fotodetektoren 8 benötigt, was die Produktionskosten verringert.

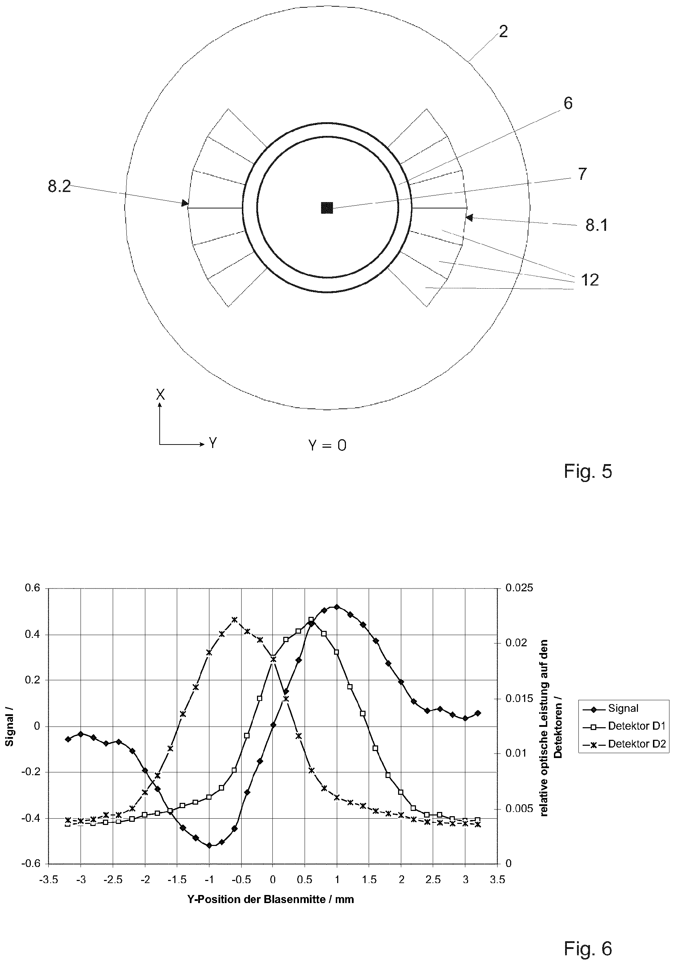

Fig. 5 zeigt eine Ansicht des Neigungssensors 1 von oben ohne die Deckschicht 4. Der Fotodetektor 8 umfasst in bekannter Weise einzelne Segmente 12. In dieser Darstellung sind zwei Fotodetektoren 8 nur für die Y-Komponente der Bewegung der Gasblase 6 dargestellt. Der äußere Begrenzungsradius der Detektoren beträgt 3,8 mm, der innere Begrenzungsradius beträgt 1,3 mm. Selbstverständlich kann der Fotodetektor 8 auch komplett ringförmig ausgeführt sein und eine Signalauswertung auf der Basis der einzelnen Segmente erfolgen. In der Zeichnung ist ein Teil der Detektoren durch die Gasblase verdeckt.

Da die Darstellung im Wesentlichen maßstabsgerecht ist, ist deutlich zu erkennen, dass die Gasblase 6 aufgrund der gewählten Sensorabmessung in jeder Richtung um nicht mehr als ihren Durchmesser bewegt werden kann.

In Fig. 6 sind die Signale des Sensors gesamt (Signal) und der Fotodetektoren 8.1 und 8.2 (Detektor 1 und Detektor 2) für eine bestimmte bevorzugte Parameterkonstellation dargestellt. Das Signal S für den Sensor ergibt sich zu S=(D1-D2)/(D1+D2), wobei D1 und D2 die optischen Leistungen auf den Fotodetektoren 8.1. und 8.2 darstellen.

Die Verläufe zeigen für eine Flüssigkeit mit dem Absorptions-koeffizienten α = 0,2 mm⁻¹, einer Brechzahl von 1,385, einem TIS-Wert an der Grenzfläche Flüssigkeit-Mantelfläche sowie Flüssigkeit-Deckschicht von 0,15 und einen TIS-Wert an der Grenzfläche Gasblase-Deckschicht von 0,2 ein durchweg positives Sensorsignal S für eine Verschiebung der Gasblase in y-Richtung. Somit kann auch nach Durchlaufen des maximalen Sensorsignals eindeutig zugeordnet werden, über welchem Detektor sich die Gasblase befindet. Bewegt sich die Blase nämlich in negativer Y-Richtung, werden alle Sensorsignale negativ.

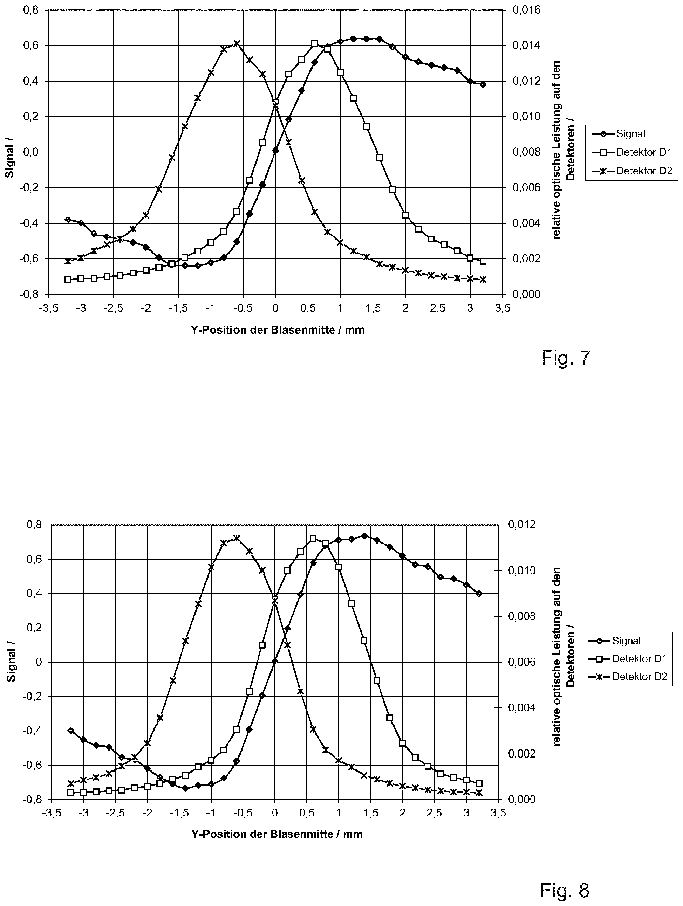

In Fig. 7 ist das Signaldiagramm für eine zweite bevorzugte Parameterkonstellation dargestellt. Hier beträgt der Absorptionskoeffizient α der Flüssigkeit 0,5 mm⁻¹. Der TIS-Wert an der Grenzfläche Flüssigkeit/Mantelfläche sowie Flüssigkeit/Deckschicht beträgt 0,25 und der TIS-Wert an der Grenzfläche Gasblase-Deckschicht beträgt 0,3.

In Fig. 8 ist das Signaldiagramm für eine dritte bevorzugte Parameterkonstellation dargestellt. Hier beträgt der Absorptionskoeffizient α der Flüssigkeit 0,5 mm⁻¹. Der TIS-Wert an der Grenzfläche Flüssigkeit/Mantelfläche sowie Flüssigkeit/Deckschicht beträgt 0,05 und der TIS-Wert an der Grenzfläche Gasblase-Deckschicht beträgt 0,1.

Das Arbeitsprinzip des erfindungsgemäßen Neigungssensors wurde hier für eine zweidimensionale Neigungsmessung dargestellt, kann aber selbstverständlich für eine dreidimensionale Neigungsmessung angepasst werden, wenn Fotodetektoren in X-Richtung entsprechend ausgewertet werden.

### Bezugszeichenliste

- 1: Neigungssensor
- 2: Mantelfläche des Gehäuses
- 3: Boden des Gehäuses
- 4: Deckschicht
- 5: Flüssigkeit
- 6: Gasblase
- 7: Lichtquelle
- 8: Fotodetektor
- 9: Glasplatte
- 10: Optische Achse
- 11: Strahlengang
- 12: Segmente des Fotodetektors

## Patentansprüche

1. Neigungssensor (1) mit einem Gehäuse, das mit einer Flüssigkeit (5) und einer Gasblase (6) gefüllt und durch eine konvex gewölbte Deckschicht (4) abgeschlossen ist, an der sich die Gasblase (6) entlang bewegt, wenn der Neigungssensor (1) gegenüber einer horizontalen Bezugsebene gekippt wird, wobei der Neigungssensor (1) weiterhin eine Lichtquelle (7) und mindestens einen Fotodetektor (8) umfasst, die der Deckschicht gegenüberliegend angeordnet sind, **dadurch gekennzeichnet, dass** die Flüssigkeit (5) für die Wellenlänge der Lichtquelle (7) einen Absorptions-Koeffizienten größer 0,05 mm⁻¹ aufweist, und dass die Deckschicht (4) reflektierend ist.

2. Neigungssensor (1) nach Anspruch 1, **dadurch gekennzeichnet, dass** das Gehäuse eine zylindrische Mantelfläche (2) und einen Boden (3) aufweist, wobei die Lichtquelle (7) und der Fotodetektor (8) am Boden (3) des Gehäuses in einer Ebene angeordnet sind.

3. Neigungssensor (1) nach Anspruch 2, **dadurch gekennzeichnet, dass** die Mantelfläche (2) und/oder die Deckschicht (4) aus einem Metall, Halbmetall oder Kunststoff besteht.

4. Neigungssensor (1) nach einem der Ansprüche 1 bis 3, **dadurch gekennzeichnet, dass** an einer ersten Grenzfläche zwischen der Flüssigkeit (5) und dem Gehäuse und an einer zweiten Grenzfläche zwischen der Gasblase (6) und dem Gehäuse eine Lichtstreuung auftritt.

5. Neigungssensor (1) nach Anspruch 4, **dadurch gekennzeichnet, dass** die erste Grenzfläche einen TIS-Wert von etwa 0,15 und die zweite Grenzfläche einen TIS-Wert von etwa 0,2 aufweist.

6. Neigungssensor (1) nach einem der Ansprüche 2 bis 5, **dadurch gekennzeichnet, dass** die Mantelfläche (2) und die Deckschicht (4) aus dunkel eloxiertem Aluminium bestehen.

7. Neigungssensor (1) nach einem der Ansprüche 1 bis 6, **dadurch gekennzeichnet, dass** die Flüssigkeit (5) aus der Gruppe der Alkane gewählt ist.

8. Neigungssensor (1) nach Anspruch 7, **dadurch gekennzeichnet, dass** die Flüssigkeit gefärbt ist.

9. Neigungssensor (1) nach Anspruch 5, **dadurch gekennzeichnet, dass** die Lichtquelle (7) divergentes Licht emittiert und mit einer optischen Achse (10) zentriert ist.

10. Neigungssensor (1) nach einem der Ansprüche 1 bis 9, **dadurch gekennzeichnet, dass** der Fotodetektor (8) durch Segmente gebildet ist, die einen Ring um die Lichtquelle (7) bilden.

11. Neigungssensor (1) nach einem der Ansprüche 1 bis 10, **dadurch gekennzeichnet, dass** der mindestens eine Fotodetektor zwei ringsegmentförmige Fotodetektoren (8) umfasst, die so angeordnet sind, dass die Bestrahlungsstärke auf derjenigen Seite einer Symmetrieachse zunimmt, auf der sich der größere Teil der Gasblase (6) befindet, wenn der Neigungssensor (1) aus dem Lot gebracht ist.

12. Neigungssensor (1) nach einem der Ansprüche 1 bis 11,
**dadurch gekennzeichnet, dass** die Lichtquelle (7) und der mindestens eine Fotodetektor (8) durch eine Glasplatte (9) abgedeckt oder in diese eingebettet sind.

13. Neigungssensor (1) nach einem der Ansprüche 1 bis 12,
**dadurch gekennzeichnet, dass** die Lichtquelle (7), der mindestens eine Fotodetektor (8) und eine Auswerteschaltung auf einem gemeinsamen Substrat angeordnet sind.

## Claims

1. Inclination sensor (1) with a housing which is filled with a liquid (5) and a gas bubble (6) and is closed by a convexly curved cover layer (4), along which the gas bubble (6) moves when the inclination sensor (1) is tilted relative to a horizontal reference plane, wherein the inclination sensor (1) further comprises a light source (7) and at least one photodetector (8), which are arranged opposite the cover layer, **characterised in that** the liquid (5) has for the wavelength of the light source (7) an absorption coefficient greater than 0.05 mm⁻¹ and that the cover layer (4) is reflective.

2. Inclination sensor (1) according to claim 1, **characterised in that** the housing has a cylindrical circumferential surface (2) and a base (3), wherein the light source (7) and the photodetector (8) are arranged in a plane at the base (3) of the housing.

3. Inclination sensor (1) according to claim 2, **characterised in that** the circumferential surface (2) and/or the cover layer (4) consist of a metal, half-metal or synthetic material.

4. Inclination sensor (1) according to any one of claims 1 to 3, **characterised in that** light scattering takes place at a first boundary surface between the liquid (5) and the housing and at a second boundary surface between the gas bubble (6) and the housing.

5. Inclination sensor (1) according to claim 4, **characterised in that** the first boundary surface has a TIS value of approximately 0.15 and the second boundary surface has a TIS value of approximately 0.2.

6. Inclination sensor (1) according to any one of claims 2 to 5, **characterised in that** the circumferential surface (2) and the cover layer (4) consist of dark anodised aluminium.

7. Inclination sensor (1) according to any one of claims 1 to 6, **characterised in that** the liquid (5) is selected from the group of alkanes.

8. Inclination sensor (1) according to claim 7, **characterised in that** the liquid is coloured.

9. Inclination sensor (1) according to claim 5, **characterised in that** the light source (7) emits divergent light and is centred by an optical axis (10).

10. Inclination sensor (1) according to any one of claims 1 to 9, **characterised in that** the photodetector (8) is formed by segments which form a ring around the light source (7).

11. Inclination sensor (1) according to any one of claims 1 to 10, **characterised in that** the at least one photodetector comprises two photodetectors (8) which each have the shape of a segment of a ring and which are so arranged that the irradiation strength increases on that side of an axis of symmetry at which the greater part of the gas bubble (6) is present when the inclination sensor (1) is taken out of the vertical.

12. Inclination sensor (1) according to any one of claims 1 to 11, **characterised in that** the light source (7) and the at least one photodetector (8) are covered by or embedded in a glass plate (9).

13. Inclination sensor (1) according to any one of claims 1 to 12, **characterised in that** the light source (7), the at least one photodetector (8) and an evaluating circuit are arranged on a common substrate.

## Revendications

1. Capteur d'inclinaison (1) avec un boîtier rempli d'un liquide (5) avec une bulle de gaz (6) et fermé par une couche de couverture (4) bombée convexe, contre laquelle se déplace la bulle de gaz (6) quand le capteur d'inclinaison (1) est basculé par rapport à un plan de référence horizontal, le capteur d'inclinaison (1) comprenant en outre une source lumineuse (7) et au moins un photodétecteur (8) disposés face à la couche de couverture, **caractérisé en ce que** le liquide (5) présente pour la longueur d'onde de la source lumineuse (7) un coefficient d'absorption supérieur à 0,05 mm⁻¹, et **en ce que** la couche de couverture (4) est réfléchissante.

2. Capteur d'inclinaison (1) selon la revendication 1, **caractérisé en ce que** le boîtier présente une surface d'enveloppe (2) cylindrique et un fond (3), la source lumineuse (7) et le photodétecteur (8) étant disposés sur le même plan sur le fond (3) du boîtier.

3. Capteur d'inclinaison (1) selon la revendication 2, **caractérisé en ce que** la surface d'enveloppe (2) et/ou la couche de couverture (4) sont en métal, semi-métal ou en matière plastique.

4. Capteur d'inclinaison (1) selon l'une des revendications 1 à 3, **caractérisé en ce qu'**une diffusion lumineuse se produit sur une première surface limite entre le liquide (5) et le boîtier et sur une deuxième surface limite entre la bulle de gaz (6) et le boîtier.

5. Capteur d'inclinaison (1) selon la revendication 4, **caractérisé en ce que** la première surface limite présente une valeur TIS de 0,15 environ et la deuxième surface limite une valeur TIS de 0,2 environ.

6. Capteur d'inclinaison (1) selon l'une des revendications 2 à 5, **caractérisé en ce que** la surface d'enveloppe (2) et la couche de couverture (4) sont an aluminium anodisé sombre.

7. Capteur d'inclinaison (1) selon l'une des revendications 1 à 6, **caractérisé en ce que** le liquide (5) est sélectionné dans le groupe des alcanes.

8. Capteur d'inclinaison (1) selon la revendication 7, **caractérisé en ce que** le liquide est coloré.

9. Capteur d'inclinaison (1) selon la revendication 5, **caractérisé en ce que** la source lumineuse (7) émet une lumière divergente et est centrée avec un axe optique (10).

10. Capteur d'inclinaison (1) selon l'une des revendications 1 à 9, **caractérisé en ce que** le photodétecteur (8) est constitué par des segments formant un anneau autour de la source lumineuse (7).

11. Capteur d'inclinaison (1) selon l'une des revendications 1 à 10, **caractérisé en ce que** ledit au moins un photodétectéur comprend deux photodétecteurs (8) formés comme segments annulaires, disposés de telle manière que l'intensité de rayonnement augmente sur le côté d'un axe de symétrie où se trouve la plus grande partie de la bulle de gaz (6) quand le capteur d'inclinaison (1) est désaligné.

12. Capteur d'inclinaison (1) selon l'une des revendications 1 à 11, **caractérisé en ce que** la source lumineuse (7) et ledit au moins un photodétecteur (8) sont recouverts par une plaque de verre (9) ou incorporés à celle-ci.

13. Capteur d'inclinaison (1) selon l'une des revendications 1 à 12, **caractérisé en ce que** la source lumineuse (7), ledit au moins un photodétecteur (8) et un circuit d'analyse sont disposés sur un substrat commun.
